# EUROPEAN PATENT APPLICATION

(11) **EP 1 398 893 A2**
(43) Date of publication of application: **17.03.2004**
(21) Application number: 03292181.9
(22) Date of filing: 05.09.2003
(51) Int. Cl.: H04B 10/10, G02B 6/42

(54) **Receiver for a free space optics system**

(30) Priority: 12.09.2002 IT MI20021938
(71) Applicant: ALCATEL, 75008 Paris (FR)
(72) Inventor: Garofoli, Primo, 20133 Milano (IT); Grassi, Elena, 20052 Monza (IT); Verbana, Gianfranco, 20059 Vimercate Milano (IT)
(74) Representative: Vigand, Régis Louis Michel

(57) **Abstract**

A method is described for detecting a drop in the power received in an optical receiver for free-space optical telecommunications systems and for identifying the cause of said drop in power received. The method envisages the steps of obtaining a value of power relating to the signal required on the optical axis of the receiver; of obtaining at least two additional values of power in opposite areas in respect of said optical axis; and of calculating a difference in power between said at least two additional values of power. Said difference in power is indicative of the cause of the drop in power. Once the cause of the drop in power has been determined, the appropriate countermeasures will be undertaken.

## Description

This invention concerns the field of point-to-point wireless optical telecommunications systems. In particular it concerns a receiver for such systems that is capable of processing the signal received in a suitable manner for the purpose of maximising said signal received, discriminating the cause that led to the decrease in power, if any.

Wireless optical transmission systems for transmitting a light signal on free-space are known. Operation of the optical systems of this type, for the transmission on free-space of a modulated light signal, is based fundamentally on one or more lasers coupled to one or more lenses (transmitting end) and on one or more lenses capable of focusing the laser beam striking the sensitive surface of the detector (receiving end).

In order for free-space optical transmission system to function properly, it is necessary to ensure that the components of the transmitting end and of the receiving end are perfectly aligned with each other, so as to avoid introducing additional losses in the signal to be transmitted. The quality of the signal transmitted is ensured as long as the level of the signal received is higher than the threshold level of the receiver.

A decrease in the signal received may be due, mainly, to the following causes:
- mechanical problems: loss of alignment of the transmitter in respect of the receiver due, for example, to the action of the wind. The result is a possible deformation of the wave front.
- Weather problems: rain, snow or fog.

Depending on what the actual cause of the decrease in power received is, the appropriate action has to be taken. If the cause is of the mechanical type (loss of alignment), it will be necessary to take action on the tracking device in order to restore correct alignment between the transmitter and the receiver.

If, on the contrary, the cause of the drop in power is due to weather-related events, similarly to conventional radio transmission systems, it is necessary to adjust the ATPC (Automatic Power Control) device. It is well known that Automatic Power Control (ATPC) is currently used in radio systems having a system of fixed aerials, therefore in systems in which the decrease in power received is due solely to causes external to the equipment (weather-related causes).

In wireless optical systems, to increase the length of the links, the beam transmitted is much narrower than a radio beam, typically at least ten orders of magnitude narrower.

The structure supporting an optical system must have a stability far greater than that of the transmitted beam. If this is not possible, automatic tracking systems are used.

Therefore, in the event of free-space optical transmission systems, the cause of a decrease in the signal received cannot be attributed solely to upsets external to the equipment, and causes connected with the loss of alignment of the transmitted beam-must also be considered.

Observing the values of the power received alone is not sufficient for maximising the power transmitted or for providing correct information for the purpose of restoring alignment of the tracking system. If the power received decreases due to weather-related reasons, it becomes useless to attempt to restore alignment of the system and there is also a risk of the system being momentarily out of service.

If the power drops due to loss of alignment, it is useless to reduce the fading margin (for any possible future needs) by increasing the power transmitted.

In the light of the above, the main aim of this invention is to provide a method for recognising, in free-space optical transmission system, the true causes that have led to a drop in the power received.

A further aim of this invention is to provide a method that, in response to information on the actual causes that have led to a drop in the power received, will act correctly, increasing the transmission power if the cause has to be attributed to weather-related events and/or realigning the system if a mechanical loss of alignment has occurred. Therefore, according to this invention, it is possible to use the Automatic Power Control System and the tracking system at the same time.

A further aim of this invention is to provide a receiver for free-space optical transmission systems capable of implementing the method according to the invention.

These and other aims are achieved by means of a method according to independent claim 1 and a receiver for free-space optical transmission systems having the characteristics indicated in independent claim 8. Further advantageous features of this invention are indicated in the respective dependent claims. All the claims are understood to be integral parts of this description.

This invention is based on the concept that a decrease in the power received due to weather-related events (flat fading) does not cause a displacement of the spot received from its focus on the original focal plane. On the contrary, a decrease in the power received due to a loss of alignment between the transmitter and the receiver is shown by a displacement of the spot received from its focus on the original focal plane.

The invention will undoubtedly appear clear from the detailed description following below, provided by way of example only and not as a limitation, to be read in conjunction with the attached drawings in which the figures show:
- Fig. 1 shows schematically an embodiment of a receiver for free-space optical telecommunications systems according to this invention;
- Fig. 2 shows a cross-section of the length of multi-fibre cable used in the receiver of Fig. 1;
- Figures 2a and 2b show alternative configurations to that of Fig. 2;
- Fig. 3 is a graph showing the relative variation in intensity of the signal received depending on the distance from the focal point in a direction perpendicular to the optical axis;
- Fig. 4 shows schematically and in perspective the principle of operation of this invention, limited to axis X, in the event of alignment between the transmitter and the receiver;
- Fig. 5 shows schematically and in perspective the principle of operation of this invention, limited to axis X, in the event of mechanical loss of alignment between the transmitter and the receiver; and
- Fig. 6 shows a flow chart of the logic underlying operation of a preferred embodiment of this invention.

Generally, a known receiver for receiving a modulated light signal transmitted on air by a corresponding transmitter includes one or more lenses L, capable of focusing the laser beam striking the sensitive surface of a detector. Generally, the detector includes a length of fibre F and photodiode APD or a photodiode PIN. The output from the photodiode, by means of a suitable interface, leads the required signal to an optical receiver.

This invention provides detection of whether the position of the incident laser beam corresponds to the axis of the detector. If this is so, a possible drop in the power received must be attributed to weather-related effects. If it is not, a loss of alignment between the transmitter and the receiver has occurred, to be corrected by means of a tracking system. This invention is capable of providing indications as to the extent of the displacement and on its direction, so that the correct action can be taken on the tracking system.

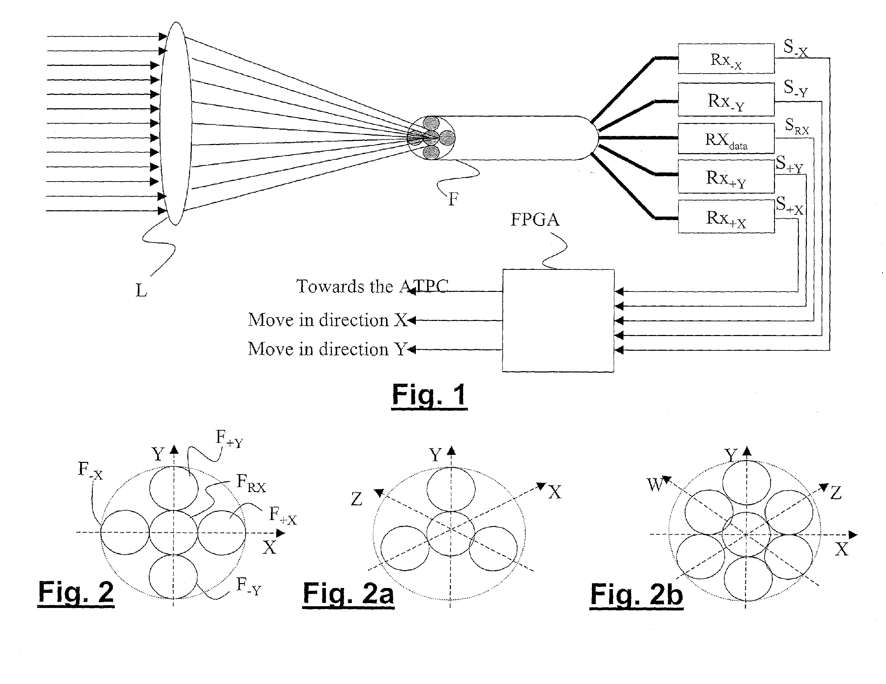

According to a preferred embodiment of the optical receiver OR of this invention, illustrated schematically in Fig. 1, a length of fibre comprising several fibres is used in the focus of the receiver. Conveniently, the multi-fibre length comprises five wires F_{RX}, F_{-X}, F_{+X}, F_{-Y}, F_{+Y} arranged orthogonally, as in Fig 2.

The central fibre F_{RX} is connected to an optical receiver RX_{data} for detecting the required signal, as is normally the case in a known optical receiver. The four lateral fibres F_{-X}, F_{+X}, F_{-Y}, F_{+Y} are arranged in a "crossed" or orthogonal position, that is to say arranged according to the four points of the compass: North, South, East and West. Each of the four lateral fibres is connected to a different control optical receiver. According to the embodiment of this invention illustrated here, there are therefore four control optical receivers, RX_{-X,} RX_{+X}, RX_{-Y}, RX_{+Y} in addition to the main receiver RX_{data.}

Necessarily, the main receiver RX_{data} has electrical characteristics and therefore costs determined by the bit rate of the system (for example, currently, 155 Mb/s, 2.5 Gb/s or more). As far as concerns the four additional receivers RX_{-X,} RX_{+X,} RX_{-Y}, RX_{+Y}, they may also have a lower maximum bit rate than that of the system, since the control signals vary slowly in time. For example, a maximum bit rate of 10 Kb/sec is considered acceptable. The sensitivity of the control receivers is at least twenty dB higher than that of the main data receiver.

The outputs from the additional receivers are sent, together with the output from the main receiver, to a processing block FPGA that processes all the data received, determines the cause of any drop in the power received and takes the necessary corrective action.

By way of example but not of a limitation, the principle of operation is described below in the case of "extreme" size conditions, that is to say the version with a bit rate of 2.5 Gbit/sec. At this speed it is possible to use single-mode fibres having a core diameter of about nine microns. In any case, the higher the speed of transmission the smaller the surface area of the fibre or of the photodiode. It is well-known that in wireless optical systems it is almost impossible to focus a laser source to this order of magnitude, and the surface area of the element receiving the focused spot, fibre or photodiode must be as large as possible. It is currently possible, for a 2.5 Gbit/sec wireless system, to use multi-mode fibres having a core diameter of 62.5 microns for short paths (tens of cms). In order to avoid additional losses, the optical system must focus with a spot size of 63 microns or less.

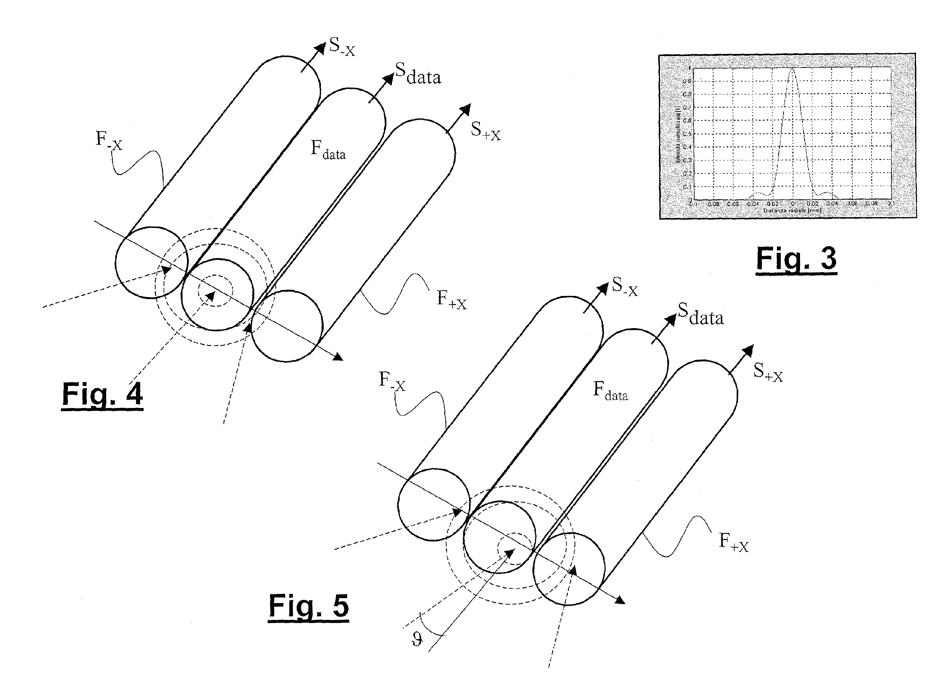

The spot size, or circle of confusion, does not have a constant distribution in amplitude. The profile of the amplitude/spot-size diameter distribution can in any way be calculated for each receiving optical system. A typical profile of a refractive system is illustrated in Fig. 3. 90% of the power received is concentrated within a circle having a relatively small diameter, comparable more or less to the diameter of the fibre. It is also observed that spot sizes with very low amplitude levels have a diameter two or three times larger than the diameter inside which 90 % of the power received is collected.

The principle of operation of the preferred embodiment of this invention (four additional fibres), referred to axis X alone, is illustrated in Fig. 4. When the system is perfectly aligned, in other words when the telescope is exactly perpendicular to the incoming wave front, the signal is focused at a distance that depends on the focal distance of the target, and the focused spot lies on the optical axis. In these conditions, the central fibre, if appropriately sized, contains almost the entire maximum power. In this specific case, good sizing of the central fibre calls for a core of 62.5 microns and a cladding of 125 microns.

In these conditions of perfect alignment, the control receivers RX_{-X} e RX_{+X}, contain, by means of their respective fibres F_{-X} e F_{+X}, the same signal intensity. Since the sensitivity of the control receivers RX_{-X} e RX_{+X} is considerably lower than that of the main receiver RX_{dati}, due to the fact that they have a low bit rate, it is possible to calculate the difference ΔX between the signals S_{-X} and S_{+X} at the output of the control receivers RX_{-X} and RX_{+X}, respectively. The difference ΔX between the signals S_{-X} and S₊ₓ can be made either in the analogue mode, by means of differential amplifiers, or in the digital mode, following suitable analogue/digital conversion.

Similarly, by extending the example also to the Y axis, in the case of substantial alignment, the differences ΔX and ΔY between the signals S_{-X} and S_{+X} and between the signals S_{-Y} and S_{+Y}, will provide a voltage close to zero or in any case within the design tolerance of the system. In these conditions, any drop in the power received will certainly have been caused by weather-related events, since the tracking has remained within the design tolerance of the system.

If a drop in the power received occurs in alignment conditions, the Automatic Power Control Circuit (ATPC) will be enabled by means of a remotized radio channel, and an increase in the power being transmitted can be requested.

By way of example, what happens when the optical target is not exactly perpendicular to the incoming wave is illustrated in Fig. 5. In this case the spot size does not lie on the optical axis (axis of the main fibre). Instead, it is displaced, for example, by a certain angle θ on the axis X. In these conditions, there will be a drop in the power received (P_{RX}) on the data receiver RX_{dati}.

Again with reference to Fig. 5, due to the displacement of the axis in respect of the optical axis, the receiver RX_{-X} will undergo a drop in the power received S_{-X} while the receiver RX_{+X} will undergo an increase of the signal S_{+X}.

The signal ΔX, being the difference between S_{-X} and S_{+X,} will take on a value proportional to the amplitude of the angle 0. If the difference signal ΔX is greater than a reference voltage "e" (defined in the design stage) it can certainly be deduced that the cause that led to the lowering of the main signal was a loss of alignment.

By using a fibre arrangement according to this invention, it is possible not only to find out the cause, but it is also possible to obtain all the information required for taking the correct action on the system alignment.

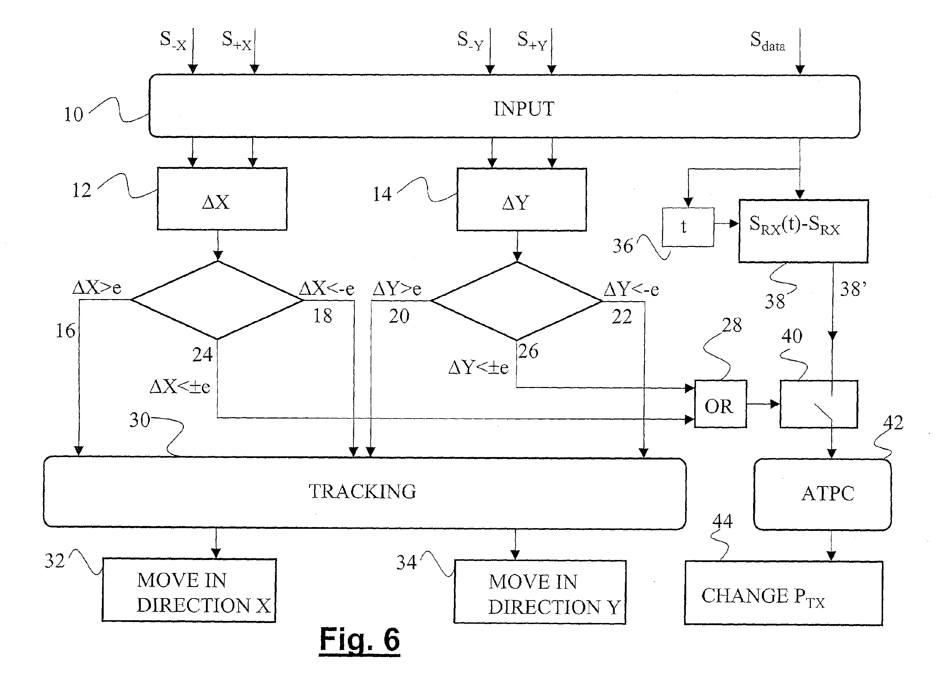

Fig. 6 shows a flow chart that illustrates schematically the steps of the method according to this invention, with specific reference to the fibre arrangement shown on Fig. 2, implemented by the processing block FPGA of Fig. 1. The FPGA block receives as an input 10 the data signal S_{data}, and the signals S_{-X}, S_{+X}, S_{-Y}, S_{+Y} output from the control optical receivers, RX_{-X}, RX_{+X}, RX_{-Y}, RX_{+Y}. The difference ΔX between the signals S_{-X} and S_{+X} and the difference ΔY between the signals S_{-Y} and S_{+Y} is then calculated (12, 14). If the difference ΔX is greater than e (or less than -e) (see 16, 18), the tracking system 30 will then be instructed to carry out the appropriate displacement (32) of the multi-fibre cable along axis X. Similarly (see 20, 22), if the difference ΔY is greater than *e* (or less than -*e*), the tracking system 30 will then be instructed to carry out the appropriate displacement (34) of the multi-fibre cable along axis Y.

Information 38' is also sent to the ATPC controller concerning the power received given by the difference between the power received currently and the power received at an earlier time. If *ΔX* < ±*e* (o *ΔY* < ±*e* ), see 24, 26, a request is sent to the transmitting automatic power control (ATPC) 40 to increase the power, which has dropped solely due to natural/weather-related events.

Thus, with reference once again to the case of Fig. 5 and to the flow chart in Fig. 6, it will be observed that, thanks to this invention, the amplitude and the sign of ΔX are known. It is therefore possible to operate correctly a motorised tracking system and to exclude the ATPC (increasing the transmission power would not bring any advantages).

In practice, every time that the value of the differences ΔY and AX between the signals are such as to show that a loss of alignment has occurred, the power received will be maximised, operating the tracking circuit and excluding the ATPC.

Every time that the value of ΔY and ΔX is around zero, the ATPC circuit will be activated. If there is a drop in the power received, in these conditions, the power transmitted will be increased by means of a traditional remote channel, as is the case in radio systems.

For the purpose of generalising this invention, which is certainly not limited to the embodiment illustrated and described in detail here, two of the many alternative arrangements of auxiliary control fibres are illustrated schematically in Figures 2a and 2b. Naturally, the arrangement with four auxiliary fibres is considered the most convenient in terms of installation, simplicity of the processing calculations and performance. There is, however, nothing to prevent the use of three auxiliary fibres, arranged in an equilateral triangle, as in Fig. 2a (which will give rise to results that are a little less precise and will entail greater complexity of the processing of the information), or of more than four fibre as in Fig. 2b (which will give rise to results that are a little more precise but will entail greater complexity of processing of the information) Theoretically, only two auxiliary fibres could also be used, however they will only be sufficient to achieve reliable results for a single axis.

It is also obvious that the receiver in Fig. 1 must be considered as an example, without limitations. It is well known to a technician specialised in this field that there are several other possibilities for making a receiver capable of implementing this invention. For example, especially for bit rates lower than those considered above, it is possible to use a photodiode at the height of the collecting focus, an optical splitter and an arrangement of photodiodes (for instance a set of four) in order to obtain information about a possible loss of alignment. The optical splitter can be of the dichroic type or of a type that lets all the wavelengths through.

The idea underlying this invention consists of separating the information about the power from the information about the loss of alignment. The scope of this invention is therefore not limited in any way by the manner in which this information is obtained, whether this is through a length of optical fibre (ending necessarily in a light detector), the head of a light-detecting diode, an APD diode or other functionally equivalent device.

## Claims

1. Method for detecting a drop in the power received by an optical receiver (OR), for free-space optical telecommunications systems, and for identifying the cause of such a drop in the power received, the method including the step of obtaining a value of power concerning the desired signal (S_{data}) on the optical axis of the receiver and being **characterized by** the following steps:
obtaining at least two additional values of power (S_{-X}, S_{+X}; S_{-Y}, S_{+Y}) corresponding to areas (F_{-X}, F_{+X}; F_{-Y}, F_{+Y}) that are opposite to said optical axis; and
calculating at least one difference in power (ΔX, ΔY) between said at least two additional values of power.

2. Method according to claim 1, **characterised in that** , in the event of a drop in the power received, a difference in power greater than a predetermined value (e) or smaller than the negative of said predetermined value (-e) is indicative of a mechanical loss of alignment.

3. Method according to claim 2, **characterised by** the step of providing a tracking system for restoring mechanical alignment, said tracking system being responsive to the difference in power (ΔX, ΔY).

4. Method according to claim 1, **characterised in that**, in the event of a drop in the power received, a difference in power smaller than a predetermined value (e) is indicative of causes external to the telecommunications system.

5. Method according to claim 4, **characterised by** the step of controlling an automatic power control (ATPC) so as to increase the transmission power correspondingly.

6. Method according to any of the preceding claims, **characterised in that** the step of obtaining at least two additional values of power includes the step of obtaining four values of power (S_{-X,} S_{+X;} S_{-Y}, S_{+Y}) in four corresponding areas (F_{-X}, F_{+X}; F_{-Y}, F_{+Y}) equidistant from the optical axis and arranged in a cross or X-shaped configuration.

7. Method according to claim 6, **characterised in that** the step of calculating a difference in power (ΔX, ΔY) includes the step of calculating a first difference in power (ΔX) along an axis (X) that connects two first areas (F_{-X}, F_{+X}) and intersects the optical axis and a second difference in power (ΔY) along an axis that connects two second areas (F_{-Y}, F_{+Y}) and intersects the optical axis.

8. Optical receiver (OR) for free-space optical telecommunications systems capable of detecting a drop in the power received and of identifying the cause of said drop in the power received, the receiver including a first light detector (RX_{data}) for obtaining a value of power referred to the required signal (S_{data}) on the optical axis of the receiver and being **characterised in that** it also includes:
at least two additional light detectors for obtaining at least two corresponding additional values of power (S_{-X}, S_{+X}; S_{-Y}, S_{+Y}) in areas (F_{-X}, F_{+X}; F_{-Y}, F_{+Y}) that are opposite to said optical axis; and
processing means (FPGA) for calculating a difference in power (ΔX, ΔY) between said at least two additional values of power.

9. Receiver according to claim 8, **characterised in that** it also includes a tracking system for restoring mechanical alignment, said tracking system being responsive to the difference in power in such a way that a difference in power greater than a predetermined value (e) or smaller than the negative of said predetermined value (-e) is indicative of a loss of mechanical alignment.

10. Receiver according to claim 8, **characterised in that** it includes an automatic power control (ATPC) and means for instructing said automatic power control so that, if there it is a difference in power smaller than predetermined value, it will increase the power of transmission accordingly.

11. Receiver according to any of the claims 8-10, **characterised in that** said at least two additional values of power are obtained for areas that are equidistant from the optical axis.

12. Receiver according to claim 11, **characterised in that** said areas equidistant from the optical axis are four and are arranged in a cross or X-shaped configuration.

13. Receiver according to claim 12, **characterised in that** said processing means calculate a first difference in power (ΔX) along a first axis (X) that connects two first areas (F_{-X}, F_{+X}) and intersects the optical axis and a second difference in power (ΔY) along a second axis (Y) that connects two second areas (F_{-Y}, F_{+Y}) and intersects the optical axis.
